# EUROPÄISCHE PATENTSCHRIFT

(11) **EP 2 324 447 B1**
(45) Veröffentlichungstag und Bekanntmachung des Hinweises auf die Patenterteilung: **05.08.2015**
(21) Anmeldenummer: 09778348.4
(22) Anmeldetag: 04.09.2009
(51) Int. Cl.: G06K 19/077

(54) **DATENTRÄGER MIT DISPLAY ZUR ANZEIGE VERSCHIEDENER ARTEN VON TRANSAKTIONSDATEN**
DATA CARRIER HAVING A DISPLAY FOR DISPLAYING DIFFERENT TYPES OF TRANSACTION DATA
SUPPORT DE DONNÉES PRÉSENTANT UN AFFICHAGE INDIQUANT DIFFÉRENTS TYPES DE DONNÉES DE TRANSACTION

(30) Priorität: 05.09.2008 DE 102008046129
(43) Veröffentlichungstag der Anmeldung: 25.05.2011
(73) Patentinhaber: Giesecke & Devrient GmbH, 81677 München (DE)
(72) Erfinder: CINKLER, Kalman, 80797 München (DE); STOCKER, Thomas, 81739 München (DE)
(86) Internationale Anmeldenummer: PCT/EP2009/006451
(87) Internationale Veröffentlichungsnummer: WO 2010/025941

(56) Entgegenhaltungen:
- US-A- 5 010 237
- US-A- 5 884 271
- US-A1- 2007 250 920

## Beschreibung

Die Erfindung betrifft einen vorzugsweise im Format einer Kreditkarte ausgeführten tragbaren Datenträger mit eigener Anzeige zur Ausführung von sicherheitsbedürftigen Transaktionen, innerhalb derer zumindest einmal Transaktionsdaten präsentiert werden müssen, die unter Verwendung des Datenträgers erzeugt und auf dessen Anzeige dargestellt werden.

Ein gattungsgemäßer, zur Ausführung sowohl von Debit- wie von Kredittransaktionen geeigneter Datenträger ist aus der WO 2008/067160 A2 bekannt. Der insbesondere im Kreditkartenformat ausgeführte Datenträger besitzt eine Prozessoreinheit, eine Energieversorgungsvorrichtung, einen Aktivierungsknopf sowie ein mehrsegmentiges Display. Die Prozessoreinheit beinhaltet insbesondere einen Generator zur Erzeugung von Einmalpaßwörtern, die auf dem Display zur Anzeige gebracht werden. Bei Aktivierung durch Betätigung des Aktivierungsknopfes erzeugt der Einmalpaßwortgenerator ein Einmalpaßwort, das als Folge von Ziffern auf dem Display zur Anzeige gebracht wird. Ein Teil der Segmente des Displays ist besonders gekennzeichnet. Abhängig davon, ob die Karte in einer Debittransaktion oder in einer Kredittransaktion eingesetzt wird, bildet entweder die gesamte im Display dargestellte Information Transaktionsdaten oder nur die in den gekennzeichneten Segmenten enthaltene Information. Die bekannte Lösung erlaubt mittels derselben Karte die Ausführung zweier verschiedener Arten von Transaktionen. Da bei der Ausführung zumindest einer Transaktionsart aber eine, wenn auch durch Kennzeichnung unterstützte Auswahl von angezeigten Informationen durch den Nutzer erfolgen muß, sind Fehlbedienungen möglich damit auch wahrscheinlich.

Aus der US 5,010,237 A ist eine IC-Karte mit einer mehrsegmentigen Anzeige, einem Mikrocontroller sowie einer Tastatur bekannt, die es unterschiedlichen Instanzen ermöglicht auf unterschiedliche Weise auf auf der Karte gespeicherte Daten zuzugreifen. Die IC-Karte verwaltet den Zugriff hierzu mittels zweier unterschiedlicher PINs. Mittels jeweils zugeordneter Tasten der Tastatur kann eingestellt werden, welche PIN geprüft werden soll. Mittels weiterer Tasten können bei erfolgreicher PIN-Eingabe auf der IC-Karte gespeicherte Daten über die Anzeige ausgegeben werden. Anspruch 1 ist gegenüber US 5 010 237 A abgegrenzt.

Es ist Aufgabe der Erfindung, einen Datenträger der vorgenannten Art so weiterzubilden, daß die Wahrscheinlichkeit der richtigen Verwendung von auf dem Datenträger angezeigten Transaktionsinformationen in einer Transaktion verbessert wird.

Diese Aufgabe wird gelöst durch einen Datenträger mit den Merkmalen des Hauptanspruchs. Bei einem erfindungsgemäßen Datenträger erlaubt die Schaltvorrichtung die gezielte Erzeugung und Darstellung von transaktionsspezifischen Transaktionsdaten durch den Mikrocontroller. Dies hat den Vorteil, daß die Auswahl bestimmter aus einer Menge von angebotenen Transaktionsdaten durch einen Nutzer nicht mehr erforderlich ist. Die Wahrscheinlichkeit einer fehlerhaften Verwendung von Transaktionsdaten wird dadurch deutlich gesenkt. Eine weitere Verbesserung des intuitiv richtigen Verständnisses von angezeigten Transaktionsdaten ergibt sich dadurch, daß die Transaktionsdaten bei dem erfindungsgemäßen Datenträger abhängig von der Art der Transaktion in unterschiedlichen Segmentkombinationen auf der Anzeige dargestellt werden. Damit signalisiert schon die Art der Darstellung auf der Anzeige einem Nutzer, für welche Art von Transaktion die angezeigten Daten verwendbar sind. In einer bevorzugten Ausführungsform ist die Schaltvorrichtung ein Druckmechanismus, der den Mikrocontroller bei jeder Betätigung zu einem Wechsel zur Ausgabe von Transaktionsdaten für eine andere Art Transaktionen veranlaßt. Um sie deutlich von einer Darstellung als nicht unterbrochene Zeichenfolge zu unterscheiden erfolgt die Darstellung der Transaktionsdaten für zumindest eine Art von Transaktionen in Form einer Zeichenfolge, die eine oder mehrere Lücken, d.h. Segmente, in denen nichts dargestellt wird, aufweist.

Unter Bezugnahme auf die Zeichnungen wird ein Ausführungsbeispiel nachfolgend näher erläutert.

### Zeichnungen

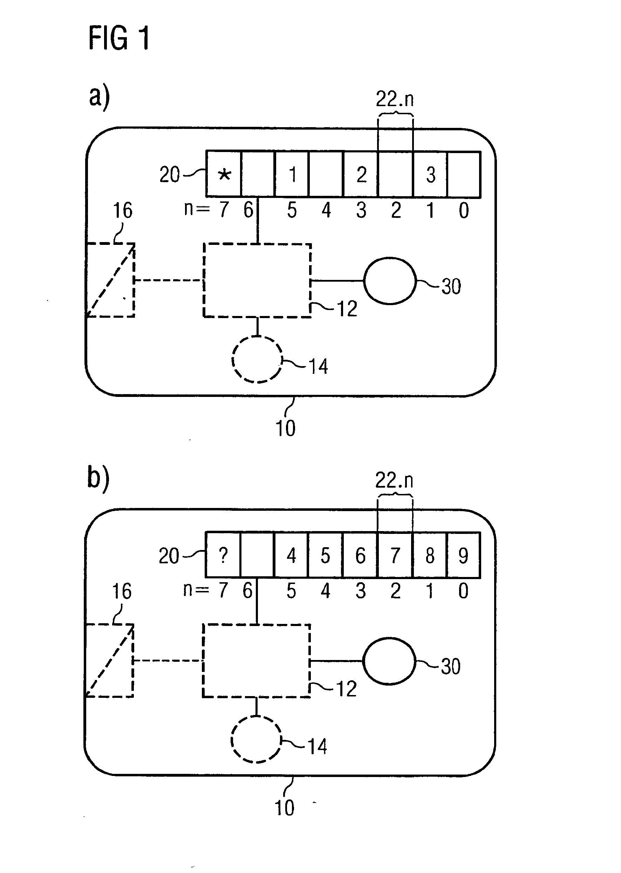

Fig. 1 zeigt eine Aufsicht auf einen Datenträger im Format einer Kreditkarte mit einer Anzeige und einer Schaltvorrichtung bei der Darstellung von Transaktionsdaten für zwei verschiedene Transaktionsarten.

Für die folgende Beschreibung wird davon ausgegangen, daß der tragbare Datenträger 10, wie in Fig. 1 gezeigt, die äußere Form einer Kredit- bzw. Chipkarte besitzt. Die Erfindung ist aber nicht auf diese Bauform beschränkt, sondern läßt sich ebenso in Körpern mit anderen Geometrien und Außenmaßen realisieren, sofern sie zumindest eine flache Oberfläche aufweisen, wie z.B. USB-Token. Die in Fig. 1 angedeutete Karte entspricht in ihren Aufbau einer Karte, wie sie in den Figuren 1 und 2 der eingangs erwähnten WO 2008/067160 dargestellt ist. Die in dieser Schrift anhand der Figuren 1 und 2 gegebene Beschreibung des Aufbaus einer Karte und ihrer äußeren Gestaltung wird, soweit nichts anderes beschrieben wird, übernommen und ausdrücklich zum Gegenstand dieser Anmeldung macht.

Der in Fig. 1 gezeigte Karte 10 besitzt die kompakten genormten äußeren Maße einer zum Mitführen in einem Portemonnaie konzipierten Kreditkarte und weist auf einer Oberfläche eine Anzeige 20 sowie eine Schaltvorrichtung 30 in Gestalt eines Druckknopfes 30 auf. Die Anzeige 20 ist ein übliches Display, z.B. ein LCDein OLED- oder ein TFT-Display, und besteht aus einer Folge von zum Beispiel sieben Segmenten 22.1 bis 22.7, die nachfolgend mit 22.n bezeichnet werden und jeweils zur Darstellunge eines alphanumerischen Zeichens ausgebildet sind. Die Zahl n der Segmente 22.n richtet sich nach der Anzahl der maximal darzustellenden Zeichen. Entsprechend kann die Anzeige 20 eine andere Zahl von Segmenten 22.n aufweisen. Die einzelnen Segmente 22.n können ferner intern in kleinere Einheiten untergliedert sein. Die Anzeige 20 wird von dem Mikrokontroller 12 gesteuert. Der Druckknopf 30 dient zur Erzeugung eines Schaltsignals für den Mikrokontroller 12 und kann z.B. als Schnappscheibe ausgeführt sein; daneben kommen aber auch beliebige andere Ausführungsformen in Betracht, die ebenfalls die Erzeugung eines Schaltsignales ermöglichen, etwa auf Wärme reagierende Anordnungen oder innerhalb des Datenträgers 10 angeordnete Anordnungen, wie Beschleunigungssensoren.

Innerhalb des Kartenkörpers 10 ist, wie strichliert angedeutet, in Form eines integrierten Schaltkreises ein Mikrocontroller 12 angeordnet, der mit der Schaltvorrichtung 30 sowie der Anzeige 20 verbunden ist. Mit dem Mikrocontroller 12 ist weiterhin optional eine autarke Energieversorgung 14 verbunden, etwa eine Batterie, sowie, ebenfalls optional, eine Schnittstelle 16 zu einem nicht gezeigten Lesegerät, etwa in Gestalt eines Kontaktfeldes oder einer Antenne. Die Schnittstelle 16 kann in bekannter Weise zur Daten-und/oder Energieübertragung dienen. Alle genannten Bauelemente 12,14,16 sind grundsätzlich von üblicher Ausführungsart, weshalb auf ihren Aufbau und ihre Ausführungsdetails hier nicht weiter eingegangen wird. Eine ausführliche Beschreibung findet sich z.B. im "Handbuch der Chipkaten", W. Rankl, W.Effing, 5. Auflage, 2008, Hanser-Verlag München.

Der tragbare Datenträger 10 ermöglicht die Ausführung zumindest zweier unterschiedlicher Arten von Transaktionen. Unter Transaktion wird dabei ein durch einen Nutzer ausgelöster Datenaustausch verstanden, durch den ein Nutzer von einem ihm zugeordneten ersten Terminal eine Änderung in einem Datenbestand bewirkt, der dem zweiten Terminal zugeordnet ist. Typischerweise präsentiert der Nutzer in der Transaktion ein Geheimnis oder beweist durch sein Eingreifen seine physische Präsenz oder die Kenntnisnahme eines Teilschrittes der Transaktion. Nachfolgend wird beispielhaft stets von der Ausführung einer Kredittransaktion, in der ein Nutzer gegen Präsentation einer Kreditkarte eine Leistung bezieht, die er nachträglich bezahlt, als erste Transaktionsart und einer Debittransaktion, in der ein Nutzer gegen Präsentation einer Debitkarte eine Leistung bezieht, die er im voraus bezahlt, als zweite Transaktionsart, ausgegangen. Selbstverständlich können weitere Arten von Transaktionen mit dem Datenträger 10 möglich sein, etwa die Ausführung von Transaktionen im Gesundheitsbereich oder die Nutzung des Datenträgers 10 als Ausweisdokument.

Der Datenträger 10 nimmt an den Transaktionen teil, indem er zumindest einmal Transaktionsdaten erzeugt und auf der Anzeige 20 zur Darstellung bringt, die für die Weiterführung der Transaktion benötigt werden. In dem Beispiel Kredit-/Debittransaktion handelt es sich bei diesen Transaktionsdaten beispielsweise um eine CW (Card Verification Value)- Nummer oder ein Einmal (OTP)-Paßwort.

Die Unterscheidung zwischen den unterschiedlichen Arten von Transaktionen erfolgt mit Hilfe der Schaltvorrichtung 30. Diese ist derart mit dem Mikrocontroller 12 verbunden, daß bei einer ersten Betätigung der Mikrocontroller 12 Transaktionsdaten für eine erste Transaktionsart, bei einer erneuten Betätigung Transaktionsdaten für eine zweite Transaktionsart, bei einer wieder neuerlichen Betätigung Transaktionsdaten für eine dritte Transaktionsart usw. ausgibt. Wurde so bis zur letzten Transaktionsart durchgeschaltet, kehrt der Mikrocontroller 12 wieder zur ersten Transaktionsart zurück und gibt neue Transaktionsdaten für diese aus.

Der Mikrocontroller 12 besitzt entsprechend eine der Anzahl der Arten von Transaktionen entsprechende Anzahl von verschiedenen Transaktionsdaten-Ausgabeeinstellungen, wobei er in jeder Ausgabeeinstellung die zu einer zugehörigen Transaktionsart entsprechenden Transaktionsdaten ausgibt. Zwischen den verschiedenen Ausgabeeinstellungen ist er schaltbar, wobei er die Ausgabeeinstellungen vorzugsweise zyklisch seriell durchschaltet und nach Erreichen der letzten möglichen Ausgabeeinstellung wieder zur ersten zurückkehrt. Mittels eines mit Hilfe der Schaltvorrichtung 30 erzeugten Schaltsignals wird der Mikrocontroller 12 zwischen den Ausgabeeinstellungen umgeschaltet.

Die Darstellung der Transaktionsdaten auf der Anzeige 20 erfolgt abhängig von der jeweils eingestellten Ausgabeeinstellung und damit abhängig von der jeweils eingestellten Transaktionsart. Im zugrundegelegten Beispiel einer Kredit-/Debitkarte erfolgt die Darstellung der Transaktionsdaten auf zwei Weisen.

Ist die ausgeführte Transaktion eine Kredittransaktion und befindet sich der Mikrocontroller 12 in der entsprechenden Einstellung, wird, wie in Fig. 1a) angedeutet, beispielsweise in den Segmenten 22.1, 22.3 und 22.5 der Anzeige 20 z.B. eine dreistellige Zahl wiedergegeben; die Segmente 22.0,22.2, 22.4 und 22.6 bleiben dagegen leer und zeigen keine Information oder zeigen eine Leerinformation, etwa in Form eines Striches "-". Die lückenhafte Wiedergabe der Transaktionsdaten signalisiert, daß die angezeigten Transaktionsdaten der Transaktionsart Kredittransaktion zuzuordnen sind.

Wir der Datenträger 10 andererseits in einer Debittransaktion eingesetzt und ist der Mikrocontroller 12 entsprechend eingestellt, werden die Transaktionsdaten, wie in Fig. 1b) angedeutet, als ununterbrochene Folge von Ziffern in den Segmenten 0 bis 5 der Anzeige 20 dargestellt. Die ununterbrochene Wiedergabe und die größere Zeichenzahl signalisieren dabei, daß die dargestellten Transaktionsdaten für die Transaktionsart Debittransaktion bestimmt sind.

Zur weiteren Kenntlichmachung der zu den angezeigten Transaktionsdaten gehörenden Transaktionsart kann weiter vorgesehen sein, daß in einem Segment 20.n der Anzeige 20, etwa, wie in Fig. 1 angedeutet, in dem Segment 22.7, ein Sonderzeichen dargestellt wird, etwa, wie in Fig. 1 in Feld 6 angedeutet, in Gestalt eines Sterns "*" oder eines Fragezeichens "?".

Durch andere Kombinationen von jeweils für eine Darstellung genutzten Segmenten 22.n lassen sich Transaktionsdaten für weitere Transaktionsarten darstellen und als solche kenntlich machen. Weitere mögliche Segmentkombinationen wären im Beispiel der Fig.1 beispielsweise die Nutzung nur der jeweils äußeren Segmente 22.0, 22.1, 22.6, 22.7 unter Belassung von Leerzeichen dazwischen oder die Nutzung nur der mittleren Segmente 22.1 bis 22.6 unter Freilassung der jeweils randseitigen Segmente 22.0 und 22.7. Wird ein Datenträger 10 wie im zugrundegelegten Beispiel nur für zwei bzw. für eine begrenzte kleine Zahl von Transaktionsarten eingesetzt, kann auch vorgesehen sein, die Darstellung unter Einhaltung bestimmter Regeln auf jeweils wechselnden Segmenten 22.n der Anzeige 20 vorzunehmen und durch die angewandte Regel die Transaktionsart anzugeben. So kann in dem Beispiel von genau zwei Transaktionsarten festgelegt sein, daß das Erscheinen einer Lücke in der Wiedergabe unabhängig von der tatsächlichen genauen Belegung der Segmente 22.n immer die Zugehörigkeit der dargestellten Transaktionsdaten zu einer ersten Transaktionsart bedeutet, und eine zusammenhängende, lückenlose Wiedergabe stets die Zugehörigkeit zu der jeweils anderen Transaktionsart, unabhängig davon, welche aufeinanderfolgenden Segmente 22.n der Anzeige 20 tatsächlich jeweils genutzt werden.

Ein anderes Anwendungsbeispiel für einen Datenträger 10, wie er vorstehend beschrieben wurde, ist die Verwendung für Banktransaktionen, die in Abhängigkeit von der jeweils gewünschten Transaktionsart die Präsentation von unterschiedlich beschaffenen Typen von Transaktionsdaten erfordern. Eine solche Fallunterscheidung kann z.B. für an sich gleichartige Transaktionen sinnvoll sein, wenn in Abhängigkeit vom Ziel der Transaktion unterschiedliche Sicherheitsstufen realisiert werden sollen. Ein Beispiel hierfür sind Überweisungen. Hier kann vorgesehen sein, daß Auslandsüberweisungen mit auf andere Weise bereitgestellten Einmalpaßwörtern (OTP) abgesichert und damit einer höheren Sicherheitsstufe zugeordnet werden als nationale Überweisungen. Beispielsweise können die Einmalpaßwörter für Auslandsüberweisungen länger sein und/oder mittels eines anderen kryptographischen Algorithmus bestimmt sein und/oder andere Zeichen beinhalten, etwa Sonderzeichen, als die Einmalpaßwörter für Inlandsüberweisungen. In einer solchen Anwendung läßt sich mittels des vorstehend beschrieben Datenträgers 10 sicherstellen, daß ein Nutzer fehlinterpretationssicher einer ausgeführten Transaktion den für den jeweiligen Fall richtigen Typ Einmalpaßwort zuordnet. Eine erste Ausgabeeinstellung ist dabei dem ersten Typ Einmalpaßwort zugeordnet, eine zweite Ausgabeeinstellung dem zweiten Typ. Das Umschalten zwischen den verschiedenen Ausgabeeinstellungen erfolgt wiederum mittels der Schaltvorrichtung 30. Sofern der Datenträger 10 nur für eine Art von Banktransaktionen mit fallabhängigen Transaktionsdaten vorgesehen ist, kann die Darstellung der unterschiedlichen Einmalpaßwort-Typen auf dieselbe Art wie im Beispiel Debit-/Kredittransaktion erfolgen. D.h. kürzere Einmalpaßwörter für nationale Überweisungen können beispielsweise, wie in Fig. 1a angedeutet, unter Belassung wenigstens einer Lücke dargestellt werden, längere Einmalpaßwörter für Auslandsüberweisungen zusammenhängend beginnend von einer Seite der Anzeige 20 aus, wie in Fig. 1b angedeutet.

Ohne weiteres ist es möglich den Datenträger 10 so zu gestalten, daß er sowohl für Debit- bzw. Kredittransaktionen wie für Banktransaktionen mit fallabhängig unterschiedlichen Typen von Transaktionsdaten geeignet ist. In einer ersten Variante ist die Anzeige 20 hierfür einfach in zwei oder mehr Bereiche unterteilt, von denen einer nur zur Darstellung von Transaktionsdaten für Debit-/ Kredittransaktionen dient, der andere nur zur Darstellung von fallabhängigen Transaktionsdaten für Banktransaktionen dient Zweckmäßig sind die Bereiche dabei durch feste, auf der Oberfläche des Datenträgers 10 am Rand der Anzeige 20 aufgebrachte Markierungen gekennzeichnet.

Alternativ oder auch zusätzlich kann der Datenträger 10 mit einer weiteren Schaltvorrichtung 30 versehen werden, so daß er insgesamt mindestens zwei Schaltvorrichtungen 30 aufweist. Die verschiedenen Transaktionsarten sind in Gruppen zusammengefaßt, vorzugsweise in Paaren, wobei etwa Debit- und Kredittransaktionen eine erste Gruppe bilden, Banktransaktionen mit fallabhängigen Einmalpaßworttypen eine zweite Gruppe u.s.w. Die zusätzliche Schaltvorrichtung dient dazu, eine Gruppe von Transaktionsarten auszuwählen. Die andere Schaltvorrichtung 30 dient innerhalb der eingestellten Gruppe zur Auswahl der Ausgabeeinstellung. Die beiden Schaltvorrichtungen 30 können von unterschiedlicher Bauart sein. Ohne weiteres kann z.B. zur Umschaltung zwischen den Transaktionsartengruppen ein Beschleunigungssensor dienen, der z.B. durch ruckartiges Bewegen des Datenträgers 10 in eine bestimmte Richtung betätigt wird, und zur Auswahl der Ausgabeeinstellung ein Druckknopf. Soll der Datenträger 10 für weitere Transaktionsarten nutzbar werden, können selbstverständlich weitere Schaltvorrichtungen 30 vorgesehen werden.

Eine weitere vorteilhafte Anwendung findet der vorbeschriebene Datenträger 10 in einer Variante des an sich bekannten TAN (TransAktionNummem)-Verfahren, wie es beispielsweise dem zuvor genannten "Handbuch der Chipkarten" entnehmbar ist. In der Variante hängt, anders als im Standardverfahren, die Zahl der von einem bereitgestellten Einmalpaßwort - einer TAN - für eine Transaktion tatsächlich zu verwendenden Stellen vom Wert bzw. von der Sicherheitsbedürftigkeit der Transaktion ab. Dabei werden für hohe Werte oder sicherheitsbedürftige Transaktionen vollständige TANs mit allen Stellen einer bereitgestellten TAN genutzt, mit abnehmendem Wert bzw. abnehmender Sicherheitsbedürftigkeit verringerte TANs mit zunehmend weniger Stellen. Beispielsweise werden von einer z.B. 8-stelligen TAN für Werte unter einem ersten Grenzwert von 50 EUR nur die letzten 4 Stellen genutzt, für Werte unter einem zweiten Grenzwert von 500 EUR nur die letzten 5 Stellen, für Werte unter einem dritten Grenzwert von 5000 EUR nur die letzten 6 Stellen u.s.w. Das Verfahren bietet vor allem für kleine Werte den Vorteil einer zusätzlichen Schadensbegrenzung, da selbst im Falle einer unberechtigten Nutzung einer verkürzten TAN damit höchstens der zugeordnete Grenzwert bewegt werden kann. In einem solchen Verfahren kann mit Hilfe des vorbeschriebenen Datenträgers 10 sichergestellt werden, daß ein Nutzer vor allem in Fällen, in denen nur ein Teil einer bereitgestellten TAN übernommen werden muß, die richtigen Stellen benutzt.

Auf der Anzeige 20 wird dabei zunächst eine komplette TAN angezeigt, z.B. wie in Fig. 1b angedeutet, eine 6-stellige TAN. Zweckmäßig gibt die Anzeige 20 eine Zusatzinformation wieder, etwa, wie in Fig. 1b angedeutet, in Form eines Sonderzeichens; alternativ kann vorgesehen sein, den jeweils gültigen Grenzwert im Klartext anzuzeigen. Das Sonderzeichen signalisiert in diesem Fall, daß eine komplette TAN dargestellt wird. Die Schaltvorrichtung 30 ist so eingerichtet, daß bei jeder Betätigung die Ausgabeeinstellung auf die nächste TAN-Verringerungsstufe springt, d.h. zunächst auf eine TAN mit 5 Stellen, dann eine mit 4 Stellen u.s.w. und diese jeweils angezeigt wird. Die weggefallenen Stellen können ausgeblendet werden, indem die entsprechenden Segmente 20.n der Anzeige 20 leer bleiben. Vorzugsweise bleiben aber auch weggefallene Stellen weiter sichtbar; jedoch wird durch eine bei jeder Betätigung der Schaltvorrichtung 30 veränderte Darstellung die Nichtberücksichtigung der weggefallenen Stellen signalisiert und kenntlich gemacht. Die veränderte Darstellung kann z.B. in einem geringeren Kontrast in dem betreffenden Segment 20.n oder der Wiedergabe der entsprechenden Zeichen in einer anderen Farbe oder einer als solchen erkennbaren Änderung des Zeichens, indem es etwa durchgestrichen oder eingeklammert wird, bestehen. Zweckmäßig wechselt zudem mit jeder Verringerungsstufe das Sonderzeichen, so daß ein Nutzer an dem Sonderzeichen stets feststellen kann, welche Verringerungsstufe der TAN dargestellt ist

In einer zweckmäßigen Weiterbildung kann der Mikrocontroller 12 weitere Ausgabeeinstellungen aufweisen. Beispielsweise kann eine Ausgabeeinstellung "AUS" vorgesehen sein, in der der Mikrocontroller 12 von der autarken Energieversorgung 14 getrennt wird und keine Darstellung auf der Anzeige 20 erfolgt.

Anstelle eines zyklischen seriellen Durchschaltens der möglichen Ausgabeeinstellungen durch die Schaltvorrichtung 30 bei jeder Betätigung kann weiter vorgesehen sein, daß Ausgabeeinstellungen gezielt eingestellt werden, etwa eine erste Einstellung bei einmaliger Betätigung der Schaltvorrichtung 30 in einer bestimmten Zeit, eine zweite Einstellung bei zweimaliger Betätigung der Schaltvorrichtung 30 in einer bestimmten Zeit usw. In einer weiteren Variante kann die gezielte Einstellung bestimmter Ausgabeeinstellungen über die Betätigungsdauer einer Einzelbetätigung, mithin über die Dauer eines einzelnen Schaltsignales, erfolgen, so daß eine erste Einstellung bei kurzer Betätigung der Schaltvorrichtung erfolgt, eine zweite bei längerer Betätigung usw.

Unter Beibehaltung des grundlegenden Gedankens, die Zuordnung von sensiblen Transaktionsdaten zu einer zugehörigen Transaktionsart unverwechselbar und eindeutig zu machen, indem ihre Darstellung auf einer gegebenen Anzeige auf unterschiedliche Art erfolgt, gestattet die vorgeschriebene Lösung eine Vielzahl von weiteren Abwandlungen, die von einem Fachmann ohne weiteres vorgenommen werden. So können praktisch alle genannten Komponenten 12,14,16, 20 durch gleichwirkende Komponenten in einer anderen Technologie ersetzt werden; dies gilt insbesondere für die Gestaltung der Schaltvorrichtung 30 und die Ausführung der Anzeige 20. Ohne weiteres können die Komponenten 12,14,16, 20 jeweils aus mehreren Teilkomponenten aufgebaut oder mit anderen zu einer einzelnen Komponente integriert sein; dies gilt etwa für den Mikrocontroller 12, dessen Speicher etwa separat ausgebildet sein kann oder für die Gruppe aus Mikrocontroller 12 und Schnittstelle 16, die zusammengefasst werden kann.

## Patentansprüche

1. Tragbarer Datenträger zur Ausführung von Transaktionen mit einem Kartenkörper, in dem ein Mikrocontroller zur Erzeugung von Transaktionsdaten, eine von dem Mikrocontroller (12) gesteuerte mehrsegmentige Anzeige (20) zur Darstellung der Transaktionsdaten sowie eine Schaltvorrichtung (30) ausgebildet sind, wobei der Mikrocontroller wenigstens zwei verschiedene Arten von Transaktionsdaten erzeugen und auf der Anzeige zur Darstellung bringen kann,
**dadurch gekennzeichnet, daß**
der Mikrocontroller (12) eine der Anzahl der Arten von Transaktionen entsprechende Anzahl von verscheidenen Ausgabeeinstellungen aufweist, in denen der Mikrocontroller (12) jeweils eine andere Art von Transaktionsdaten erzeugt und zur Anzeige bringt, wobei der Mikrocontroller (12) verschiedene Arten von Transaktionsdaten jeweils in anderen Kombinationen von Segmenten (22.n) der Anzeige (20) darstellt, und
bei Betätigung der Schaltvorrichtung (30) der Mikrokontroller (12) jeweils von einer Ausgabeeinstellung in eine andere wechselt, wobei die Schaltvorrichtung (30) derart mit dem Mikrocontroller (12) verbunden ist, daß der Mikrocontroller (12) bei einer ersten Betätigung Transaktionsdaten für eine erste Transaktionsart, bei einer erneuten Betätigung Transaktionsdaten für eine zweite Transaktionsart, bei einer wieder neuerlichen Betätigung Transaktionsdaten für eine dritte Transaktionsart usw. ausgibt.

2. Datenträger nach Anspruch 1, **dadurch gekennzeichnet, daß** der Mikrocontroller (12) in zumindest einer Ausgabeeinstellung zusammen mit den Transaktionsdaten ein vorbestimmtes Symbol zur Anzeige bringt, das die Transaktionsart bezeichnet.

3. Datenträger nach Anspruch 1, **dadurch gekennzeichnet, daß** der Mikrocontroller (12) wenigstens eine Art von Transaktionsdaten in einer lückenhaften Reihe von Segmenten (22.n) ausgibt, wobei zumindest ein zwischen zwei für die Darstellung genutzten Segmenten befindliches Segment (22.0, 22.2, 22.4) leer bleibt oder eine Leerinformation darstellt.

4. Datenträger nach Anspruch 1, **dadurch gekennzeichnet, daß** der Mikrocontroller (12) bei Betätigung der Schaltvorrichtung (30) jeweils die Ausgabeeinstellung von zumindest einem Segment (20.n) zwischen der Einstellung zur Wiedergabe eines Zeichens und der Einstellung einer Leerinformation ändert, um die Zugehörigkeit von dargestellten Transaktionsdaten zu einer Transaktionsart zu signalisieren.

5. Datenträger nach Anspruch 1, **dadurch gekennzeichnet, daß** eine erste Art von Transaktionsdaten Einmalpaßwörter zur Ausführung von Debitkarten-Transaktionen sind und eine andere Art dynamische Kennungen zur Ausführung von Kredtikarten-Transaktionen sind.

6. Datenträger nach Anspruch 1, **dadurch gekennzeichnet, daß** eine erste Art von Transaktionsdaten Einmalpaßwörter zur Verwendung in einer Banktransaktion sind und eine andere Art von Transaktionsdaten auf eine andere Weise bestimmte Einmalpaßwörter zur Verwendung in dergleichen Art Banktransaktion sind, wenn die auszuführende Transaktion einer höheren Sicherheitsstufe zugeordnet ist.

7. Datenträger nach Anspruch 1, **dadurch gekennzeichnet, daß** die Schaltvorrichtung (30) als Schnappscheibe ausgeführt ist.

8. Datenträger nach Anspruch 1, **dadurch gekennzeichnet, daß** er wenigstens zwei Schaltvorrichtungen (30) aufweist, wobei die erste dazu dient, ein Gruppe von Transaktionsarten auszuwählen und die zweite dazu, innerhalb der ausgewählten Gruppe die Ausgabeeinstellung vorzunehmen.

## Claims

1. A portable data carrier for executing transactions, having a card body in which there are configured a microcontroller for generating transaction data, a multi-segment display (20) controlled by the microcontroller (12) for representing the transaction data, and a switching device (30), wherein the microcontroller can generate at least two different types of transaction data and have them represented on the display,
**characterized in that**
the microcontroller (12) has a number of different output settings that corresponds to the number of types of transactions, in which output settings the microcontroller (12) generates a respectively different type of transaction data and has them displayed, wherein the microcontroller (12) represents different types of transaction data respectively in different combinations of segments (22.n) of the display (20), and
upon operating the switching device (30), the microcontroller (12) switches respectively from one output setting to a different one, wherein the switching device (30) is so connected to the microcontroller (12) that the microcontroller (12) outputs transaction data for a first transaction type upon a first operation, transaction data for a second transaction type upon repeated operation, transaction data for a third transaction type upon again repeated operation, etc.

2. The data carrier according to claim 1, **characterized in that** the microcontroller (12) in at least one output setting has a predetermined symbol displayed together with the transaction data, which symbol designates the transaction type.

3. The data carrier according to claim 1, **characterized in that** the microcontroller (12) outputs at least one type of transaction data in an intermittent succession of segments (22.n), wherein at least one segment (22.0, 22.2, 22.4) disposed between two segments utilized for the representation remains empty or represents an empty information item.

4. The data carrier according to claim 1, **characterized in that,** upon operation of the switching device (30), the microcontroller (12) changes respectively the output setting of at least one segment (20.n) between the setting for reproducing a character and the setting of an empty information item, in order to signal the association of represented transaction data with a transaction type.

5. The data carrier according to claim 1, **characterized in that** a first type of transaction data are one-time passwords for executing debit card transactions, and a different type are dynamic identifiers for executing credit card transactions.

6. The data carrier according to claim 1, **characterized in that** a first type of transaction data are one-time passwords for use in a bank transaction, and a different type of transaction data are one-time passwords determined in a different fashion for use in the same type of bank transaction, when the transaction to be executed is allocated to a higher security level.

7. The data carrier according to claim 1, **characterized in that** the switching device (30) is executed as a snap disc.

8. The data carrier according to claim 1, **characterized in that** it has at least two switching devices (30), wherein the first one serves to select a group of transaction types, and the second one serves to adjust the output setting within the selected group.

## Revendications

1. Support de données portable destiné à l'exécution de transactions, ayant un corps de carte dans lequel sont installés un microcontrôleur pour la génération de données de transaction, un affichage (20) à plusieurs segments commandé par le microcontrôleur (12) pour la représentation des données de transaction, ainsi qu'un dispositif de commutation (30), le microcontrôleur pouvant générer au moins deux différents types de données de transaction et les représenter sur l'affichage, **caractérisé en ce que**
le microcontrôleur (12) dispose d'un nombre de différentes configurations de sortie qui correspond au nombre des types de transactions et dans desquelles le microcontrôleur (12) génère et affiche respectivement un autre type de données de transaction, le microcontrôleur (12) représentant différents types de données de transaction respectivement dans une autre combinaison de segments (22.n) de l'affichage (20) et
lors d'un actionnement du dispositif de commutation (30), le microcontrôleur (12) passe respectivement d'un réglage de sortie à un autre, le dispositif de commutation (30) étant relié de telle sorte au microcontrôleur (12) que le microcontrôleur (12) sort, lors d'un premier actionnement, des données de transaction pour un premier type de transaction, sort, lors d'un nouvel actionnement, des données de transaction pour un deuxième type de transaction, sort lors d'encore un nouvel actionnement, des données de transaction pour un troisième type de transaction, et ainsi de suite.

2. Support de données selon la revendication 1, **caractérisé en ce que** le microcontrôleur (12) affiche, dans au moins un réglage de sortie, en même temps que les données de transaction, un symbole prédéterminé qui désigne la transaction.

3. Support de données selon la revendication 1, **caractérisé en ce que** le microcontrôleur (12) sort au moins un type de données de transaction dans une série lacunaire de segments (22.n), au moins un segment (22.0, 22.2, 22.4) situé entre deux segment utilisés pour la représentation restant libre ou représentant une information vide.

4. Support de données selon la revendication 1, **caractérisé en ce que** le microcontrôleur (12), lors d'un actionnement du dispositif de commutation (30), modifie respectivement le réglage de sortie d'au moins un segment (22.n) entre le réglage destiné à la sortie d'un signe et le réglage d'une information vide afin de signaler l'appartenance de données de transaction représentées à un type de transaction.

5. Support de données selon la revendication 1, **caractérisé en ce qu'**un premier type de données de transaction sont des mots de passe à usage unique destinés à l'exécution de transactions de cartes de débit, et qu'un autre type sont des identifiants dynamiques destinés à l'exécution de transactions de cartes de crédit.

6. Support de données selon la revendication 1, **caractérisé en ce qu'**un premier type de données de transaction sont des mots de passe à usage unique destinés à l'utilisation dans une transaction bancaire, et qu'un autre type de données de transaction sont des mots de passe à usage unique déterminés d'une autre manière pour l'utilisation dans le même type de transaction bancaire quand la transaction à exécuter est affectée à un niveau de sécurité plus élevé.

7. Support de données selon la revendication 1, **caractérisé en ce que** le dispositif de commutation (30) est réalisé sous forme de disque à déclic.

8. Support de données selon la revendication 1, **caractérisé en ce qu'**il comporte au moins deux dispositifs de commutation (30), le premier servant à sélectionner un groupe de types de transactions, et le deuxième servant à effectuer à l'intérieur du groupe sélectionné le réglage de sortie.
